# EUROPÄISCHE PATENTANMELDUNG

(11) **EP 2 875 989 A1**
(43) Veröffentlichungstag der Anmeldung: **27.05.2015**
(21) Anmeldenummer: 14188032.8
(22) Anmeldetag: 08.10.2014
(51) Int. Cl.: B60L 11/18

(54) **Ladestation zur Aufladung von Elektrofahrzeugen**

(30) Priorität: 25.11.2013 DE 202013105353 U
(71) Anmelder: a+f GmbH, 97076 Würzburg (DE)
(72) Erfinder: Kremer, André, 59823 Amsberg (DE)
(74) Vertreter: advotec.

(57) **Zusammenfassung**

Die Erfindung betrifft eine Ladestation (01) zur Aufladung von Elektrofahrzeugen (04) mit elektrischer Energie, mit einem Gehäuse (08) und mit zumindest einem Ladekabel (02), dessen freies Ende mittels eines Kontaktelements (03) am Ladeanschluss des Elektrofahrzeugs (04) anschließbar ist, und mit einer elektronischen Ladesteuerung (14) zur Steuerung des Ladeprozesses nach Anschluss eines Elektrofahrzeugs (04) an der Ladestation (01), wobei das Gehäuse (08) auf der Frontseite in Sichthöhe einen Ausschnitt (07) aufweist, wobei im Gehäuse (08) hinter dem Ausschnitt (07) eine Bildschirmeinheit (05) mit einer berührungssensitiven Anzeigefläche (06) angeordnet ist, und wobei die Eingabe von Benutzerbefehlen durch Berührung von Teilen der Anzeigefläche (06) ermöglicht wird, und wobei die Bildschirmeinheit (05) eine elektronische Schnittstelle zur elektronischen Ladesteuerung (14) aufweist, über die Daten, insbesondere Benutzerbefehle, zwischen der Bildschirmeinheit (05) und der Ladesteuerung (14) ausgetauscht werden können.

## Beschreibung

Die Erfindung betrifft eine Ladestation zur Aufladung von Elektrofahrzeugen nach dem Oberbegriff des Anspruchs 1.

Im Zuge der Einführung der Elektromobilität erhalten gattungsgemäße Ladestationen zur Aufladung von Elektrofahrzeugen, beispielsweise Elektroautos oder Elektrofahrrädern, eine zunehmende Bedeutung. In Parkhäusern, auf Parkplätzen, in Betriebsstätten oder Privatgaragen werden solche Ladestationen benötigt, um die Elektrofahrzeuge nach der teilweisen oder vollständigen Entleerung der Akkumulatoren wieder neu mit elektrischer Energie zu beladen. Um das Elektrofahrzeug mit der Ladestation verbinden zu können, ist dabei ein Ladekabel an der Ladestation vorhanden, das mit einem Kontaktelement, beispielsweise einem geeigneten Stecker, an das Elektrofahrzeug anschließbar ist. Mittels einer elektronischen Ladesteuerung kann dann der Ladeprozess zur elektrischen Aufladung der Batterien im Elektrofahrzeug gesteuert werden. Die dazu erforderliche Versorgungsenergie erhält die Ladestation entweder aus dem öffentlichen Stromnetz oder einem eigenen lokal angeordneten Energiespeicher.

Bei bekannten Ladestationen sind üblicherweise kleinere Anzeigedisplays vorhanden, an denen wenige Betriebsdaten angezeigt werden können. Komfortable Benutzerdialoge können mit derartigen Displays jedoch nicht realisiert werden.

Aufgabe der vorliegenden Erfindung ist es deshalb, eine neue Ladestation zur Aufladung von Elektrofahrzeugen vorzuschlagen, mit der der Bedienkomfort für den Benutzer erhöht werden kann.

Diese Aufgabe wird durch eine Ladestation nach der Lehre des Anspruchs 1 gelöst.

Vorteilhafte Ausführungsformen der Erfindung sind Gegenstand der Unteransprüche.

Die erfindungsgemäße Ladestation beruht auf dem Grundgedanken als Benutzerschnittstelle eine Bildschirmeinheit mit berührungssensitiver Anzeigefläche einzusetzen. Derartige Touch-Screens finden zunehmend Verbreitung und sind den Benutzern aus vielen anderen Feldern vertraut. Zur Anbringung der Bildschirmeinheit in der Ladestation wird im Gehäuse der Ladestation auf der Frontseite in Sichthöhe ein Ausschnitt angebracht. Die Bildschirmeinheit wird hinter dem Ausschnitt in einer Weise befestigt, dass die berührungssensitive Anzeigefläche von der Benutzerseite her zugänglich ist. Durch die berührungssensitive Anzeigefläche können komfortable Benutzerführungen realisiert werden. Außerdem bietet die Bildschirmeinheit einen zusätzlichen Nutzen, da die Bildschirmeinheit neben der reinen Benutzerführung auch die Aufgabe anderer Mitteilungen, beispielsweise von Werbebotschaften, ermöglicht. Die Funktion der Ladestation wird somit durch die Bildschirmeinheit in Richtung eines Werbedisplays erweitert und bietet damit dem Betreiber einen Zusatznutzen.

Die Bildschirmeinheit selbst ist über eine elektronische Schnittstelle mit der elektronischen Ladesteuerung verbunden und kann auf diese Weise

Daten, insbesondere Benutzerbefehle, zwischen der Bildschirmeinheit und der Ladesteuerung austauschen.

Um die erfindungsgemäße Ladestation mit der Bildschirmeinheit kostengünstig herstellen zu können, ist es besonders vorteilhaft, auf handelsübliche Bildschirmeinheiten zurückzugreifen. Die Anzeigefläche der Bildschirmeinheit sollte deshalb bevorzugt ein 16 : 9-Format aufweisen, da es sich bei diesem Format um das für Displays übliche Format handelt, an das auch die Benutzer gewöhnt sind.

Um insbesondere auch Werbebotschaften möglichst auffällig anzeigen zu können, sollte die sichtbare Anzeigefläche der Bildschirmeinheit eine gewisse Größe aufweisen. Als besonders geeignet im Hinblick auf die Verwendung in Ladestationen haben sich Bildschirmeinheiten mit einer Anzeigefläche erwiesen, deren Bildschirmdiagonale größer als 1000 mm ist.

Um die Ladestation auch im Außenbereich einsetzen zu können, beispielsweise auf nicht überdachten Parkflächen, sollten das Gehäuse und die Bildschirmeinheit witterungsbeständig ausgebildet sein, um Beschädigungen durch Witterungseinflüsse auszuschließen. Die Fuge zwischen dem Gehäuseausschnitt und der Bildschirmeinheit sollte wasserdicht abgedichtet werden, wozu beispielsweise ein Dichtprofil in die Fuge eingelegt werden kann.

Durch den Betrieb der Bildschirmeinheit entsteht Abwärme, die zu Kühlproblemen beim Betrieb der Ladestation führen kann. Je nach klimatischen Umgebungsbedingungen kann es zur Lösung dieser Abwärmeproblematik ausreichend sein, im Gehäuse der Ladestation eine Ventilationseinrichtung vorzusehen, mit der Luft in das Gehäuse eingefördert und/oder aus dem Gehäuse ausgefördert werden kann.

Weist die Umgebungsluft eine geeignete Temperatur auf, kann durch den entsprechenden Luftaustausch der Luft im Gehäuse die Abwärme in genügender Weise abgeführt werden.

Alternativ oder additiv zur Verwendung einer Ventilationseinrichtung kann im Gehäuse auch ein Temperierungsgerät zur Kühlung und/oder Beheizung der Ladestation vorgesehen werden. Insbesondere in kühleren Gebieten, beispielsweise bei Temperaturen unter 0° C, ist es vielfach erforderlich, für eine ausreichende Innentemperatur im Gehäuse der Ladestation zu sorgen, um die Funktion der Bildschirmeinheit zu gewährleisten. Besonders vorteilhaft ist es dabei, wenn es sich bei dem Temperierungsgerät um eine Klimasteuerung oder Klimaregelung handelt, mit der die Temperatur im Gehäuse auf einen Sollwert gesteuert oder geregelt werden kann.

Im Hinblick auf eine zusätzliche Verbesserung der Benutzerführung ist es vorteilhaft, wenn an die Bildschirmeinheit Lautsprecher angeschlossen sind, über die akustische Ansagen aufgegeben werden können. Die Lautsprecher selber können dann auf der Innenseite des Gehäuses so angebracht sein, dass eine akustische Ausgabe durch die Bauteilwandung des Gehäuses hindurch ermöglicht wird.

Im Hinblick auf den Schutz der Bildschirmeinheit gegen mechanische Beschädigungen ist es vorteilhaft, wenn an der Außenseite der Anzeigefläche ein Schutzglas vorgesehen ist. Durch dieses Schutzglas können mechanische Beschädigungen, insbesondere Vandalismus, weitgehend ausgeschlossen bzw. reduziert werden.

Zum Schutz der Bildschirmeinheit vor Beschädigungen durch Umgebungsstrahlung, insbesondere durch Sonnenlicht, kann am Schutzglas eine Filterschicht zur Filterung von Infrarotlicht und/oder Ultraviolettstrahlung vorgesehen werden.

Im Hinblick auf die Verbesserung der optischen Eigenschaften der Bildschirmeinheit bei der Benutzung durch die Benutzer ist es vorteilhaft, wenn das Schutzglas eine Entspiegelungsschicht zur Reduktion von Reflektionen aufweist.

Um dem einzelnen Benutzer die Benutzung der Ladestation zu ermöglichen, ist es erforderlich, dass sich der Benutzer vor Beginn des Ladeprozesses an der Ladestation persönlich anmeldet, um insbesondere auch eine ordnungsgemäße Abrechnung des Ladeprozesses ermöglichen zu können. Die entsprechenden Identifikationsdaten kann der Benutzer in einem entsprechenden Anmeldemenu an der Anzeigefläche eingeben. Im Hinblick auf einen verbesserten Komfort ist es jedoch vorteilhaft, wenn die Ladestation eine spezielle Benutzerschnittstelle aufweist, an der sich der Benutzer anmelden und personenbezogene Identifikationsdaten übertragen kann. Eine solche Benutzerschnittstelle kann beispielsweise in der Art eines Kartenlesegeräts ausgebildet sein, in das berechtigte Benutzer Ident-Karten einschieben können.

Eine weitere Steigerung des Benutzungskomforts ergibt sich, wenn die Benutzerschnittstelle zur Benutzeridentifikation eine drahtlose Datenübertragung ermöglicht. Insbesondere ist es vorteilhaft, wenn die Benutzerschnittstelle eine Datenübertragung gemäß dem NFC-Protokollstandard erlaubt. Dieser Protokollstandard zur drahtlosen Nahfelddatenübertragung hat bereits weite Verbreitung im Bereich der Mobiltelefone gefunden, so dass eine entsprechende Benutzerschnittstelle mit NFC-Protokollstandard insbesondere eine Benutzeridentifikation mittels der Datenübertragung eines Smartphones ermöglicht. Im Hinblick auf die Nutzung der Ladestation auch als Werbedisplay sollte die Ladestation bevorzugt mit einem Internetanschluss ausgestattet sein. Über einen solchen Internetanschluss können dann Werbeinhalte in die Ladestation übertragen und an der Anzeigefläche der Bildschirmeinheit angezeigt werden. Insbesondere wird es auch möglich, nach der Identifikation eines Benutzers personenbezogene Werbeinhalte aus dem Internet zu laden und dem jeweils angemeldeten Benutzer an der Bildschirmeinheit anzuzeigen.

Um den Ladezustand eines an der Ladestation angeschlossenen Fahrzeugs auch von weitem erkennen zu können, ist es weiterhin besonders vorteilhaft, wenn die Beleuchtungseinrichtung in Abhängigkeit vom Ladeprozess ansteuerbar ist. So kann die Beleuchtungseinrichtung beispielsweise in Abhängigkeit vom Ladeprozess ihre Beleuchtungsfarbe ändern. Ist das an die Ladestation angeschlossene Elektrofahrzeug beispielsweise vollgeladen, kann grünes Licht abgestrahlt werden. Unterschreitet die Batterie des Elektrofahrzeugs dagegen einen Mindestladezustand, kann rotes Licht abgestrahlt werden.

Eine Ausführungsform der Erfindung ist in den Zeichnungen schematisiert dargestellt und wird nachfolgend beispielhaft erläutert.

Es zeigen:
- Fig. 1: eine Ladestation mit einem daran angeschlossenen Elektrofahrzeug in Ansicht von vorne;
- Fig. 2: die Ladestation gemäß Fig. 1 in seitlicher Ansicht;
- Fig. 3: die Ladestation gemäß Fig. 1 im Querschnitt;
- Fig. 4: einen vergrößerten Querschnitt durch die Bildschirmeinheit der Ladestation.

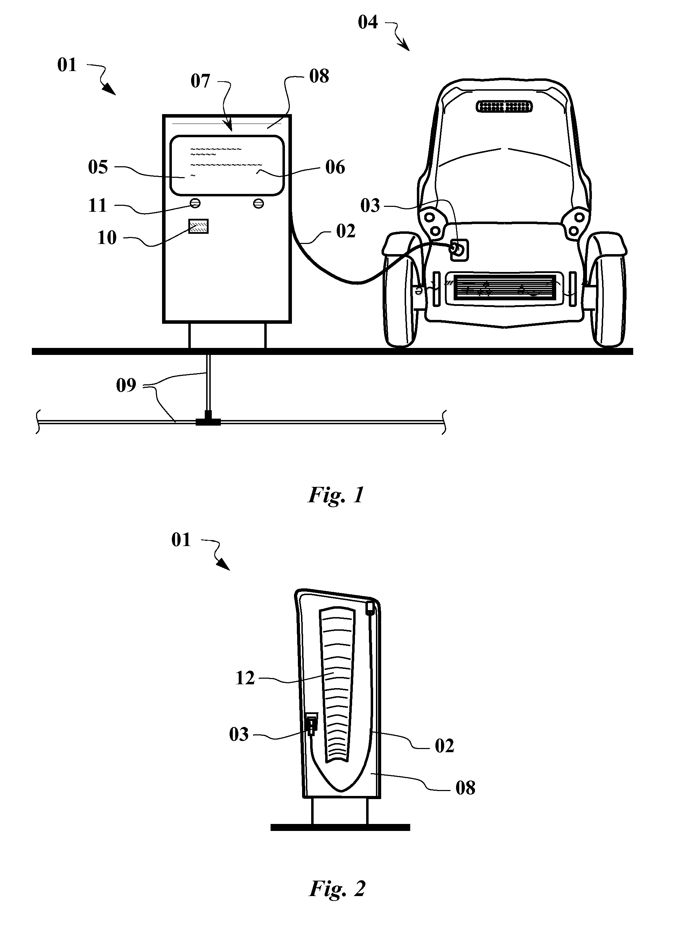

Fig. 1 zeigt eine Ladestation 01 an die mittels eines Ladekabels 02 und eines daran befestigten Ladesteckers 03 ein Elektroauto 04 zur Aufladung mit elektrischer Energie angeschlossen ist. Zur Benutzerführung bei Benutzung der Ladestation 01 dient eine Bildschirmeinheit 05 mit einer berührungssensitiven Anzeigefläche 06, die hinter einem Ausschnitt 07 im Gehäuse 08 der Ladestation 01 angeordnet ist. An der Anzeigefläche 06 der Bildschirmeinheit 05 können dabei nicht nur Benutzermenus zur Steuerung der Ladestation 01 angezeigt werden.

Stattdessen können über eine Internetverbindung 09 auch Werbeinhalte in die Ladestation 01 übertragen und an der Anzeigfläche 06 angezeigt werden.

Auf der Vorderseite des Gehäuses 08 ist eine Benutzerschnittstelle 10 zur drahtlosen Datenübertragung gemäß dem NFC-Protokollstandard vorgesehen. Mittels eines Smartphones, das ebenfalls den NFC-Protokollstandard unterstützt, kann sich der Benutzer dann drahtlos an der Ladestation 01 anmelden und identifizieren. Die Identifikationsdaten des Benutzers können nach der Anmeldung ausgewertet werden und benutzerindividualisierte Werbeinhalte können über die Internetverbindung 09 heruntergeladen und an der Bildschirmeinheit 05 angezeigt werden.

Außerdem sind an der Vorderseite des Gehäuses 08 noch zwei Lautsprecher 11 vorgesehen, mit der die Benutzerführung durch akustische Ausgaben unterstützt werden kann.

Die Anzeigefläche 06 der Bildschirmeinheit 05 weist ein 16 : 9-Format mit einer Bildschirmdiagonale von über 1000 mm auf.

Fig. 2 zeigt die Ladestation 01 mit dem nicht in Benutzung befindlichen Ladekabel 02 in seitlicher Ansicht. Auf beiden Seiten des Gehäuses 08 der Ladestation 01 sind streifenförmige Beleuchtungseinrichtungen 12 vorgesehen. Mit den Beleuchtungseinrichtungen 12 kann der Ladezustand eines an die Ladestation 01 angeschlossenen Elektrofahrzeugs signalisiert werden. Ist das Elektrofahrzeug weitgehend entladen, so leuchten nur die unteren Bereiche der Beleuchtungseinrichtung 12 in roter Farbe. Mit zunehmendem Ladungszustand leuchtet die Beleuchtungseinrichtung 12 dann in immer höheren Bereichen, wobei die Beleuchtungseinrichtung 12 im mittleren Bereich in gelber Farbe und im oberen Bereich in grüner Farbe abstrahlt. Somit wird dem Benutzer bei Betrachtung der Beleuchtungseinrichtung 12 intuitiv ein Eindruck des Ladezustands des Elektrofahrzeugs vermittelt.

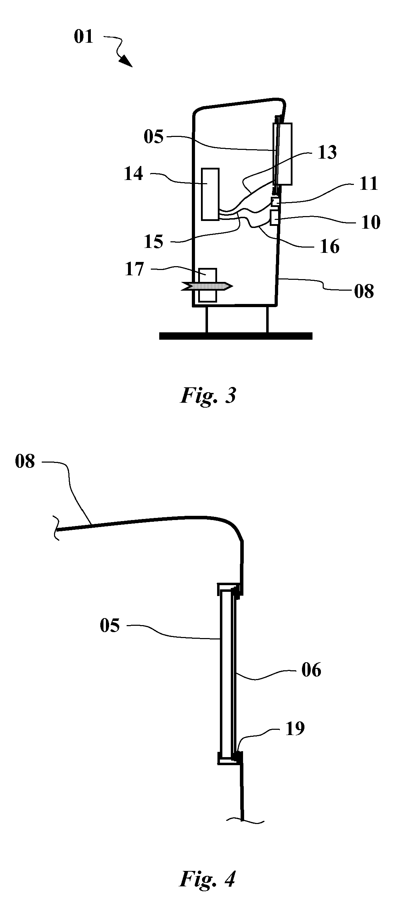

Fig. 3 zeigt die Ladestation 01 im Querschnitt. Die Bildschirmeinheit 05 ist über eine Kabelverbindung 13 mit der elektronischen Ladesteuerung 14 der Ladestation 01 verbunden. Somit kann die Bildschirmeinheit 05 mit der Ladesteuerung 14 Ein- und Ausgabedaten austauschen. Außerdem können Werbeinhalte, die über die Internetverbindung 09 in die Ladesteuerung 14 übertragen wurden, an die Bildschirmeinheit 05 weiter übertragen und dort angezeigt werden. Über weitere Kabelverbindungen 15 und 16 ist die Ladesteuerung 14 außerdem mit der Benutzerschnittstelle 10 und den Lautsprechern 11 verbunden.

An der Unterseite des Innenraums des Gehäuses 08 ist ein Temperierungsgerät 17 angeordnet. Mit dem Temperierungsgerät 17 kann Außenluft angesaugt und je nach Bedarf gekühlt oder beheizt werden. Im Ergebnis kann dann die Temperatur im Inneren des Gehäuses 08 auf eine Solltemperatur bzw. ein Solltemperaturband geregelt werden.

Fig. 4 zeigt einen vergrößerten Querschnitt der Ladestation 01 im Bereich der Bildschirmeinheit 05. Man erkennt, dass die Bildschirmeinheit 05 hinter einem Schutzglas 18 angeordnet ist, das dem Schutz der Anzeigefläche 06 vor mechanischen Beschädigungen dient. Auf dem Schutzglas 18 sind außerdem eine Filterschicht zur Filterung von Infrarotlicht und Ultraviolettstrahlung und eine Entspiegelungsschicht zur Reduktion von Reflektionen aufgedampft. Die Fuge zwischen dem Gehäuse 08 und der Bildschirmeinheit 05 wird mit Dichtelementen 19 abgedichtet, um eine ausreichende Witterungsbeständigkeit der Ladestation 01 zu gewährleisten.

## Patentansprüche

1. Ladestation (01) zur Aufladung von Elektrofahrzeugen (04) mit elektrischer Energie, mit einem Gehäuse (08) und mit zumindest einem Ladekabel (02), dessen freies Ende mittels eines Kontaktelements (03) am Ladeanschluss des Elektrofahrzeugs (04) anschließbar ist, und mit einer elektronischen Ladesteuerung (14) zur Steuerung des Ladeprozesses nach Anschluss eines Elektrofahrzeugs (04) an der Ladestation (01),
**dadurch gekennzeichnet,**
**dass** das Gehäuse (08) auf der Frontseite in Sichthöhe einen Ausschnitt (07) aufweist, wobei im Gehäuse (08) hinter dem Ausschnitt (07) eine Bildschirmeinheit (05) mit einer berührungssensitiven Anzeigefläche (06) angeordnet ist, und wobei die Eingabe von Benutzerbefehlen durch Berührung von Teilen der Anzeigefläche (06) ermöglicht wird, und wobei die Bildschirmeinheit (05) eine elektronische Schnittstelle zur elektronischen Ladesteuerung (14) aufweist, über die Daten, insbesondere Benutzerbefehle, zwischen der Bildschirmeinheit (05) und der Ladesteuerung (14) ausgetauscht werden können.

2. Ladestation nach Anspruch 1,
**dadurch gekennzeichnet,**
**dass** die Anzeigefläche (06) der Bildschirmeinheit (05) ein 16:9-Format aufweist.

3. Ladestation nach Anspruch 1 der 2,
**dadurch gekennzeichnet,**
**dass** die Anzeigefläche (06) der Bildschirmeinheit (05) eine Bildschirmdiagonale von größer als 1000 mm aufweist.

4. Ladestation nach einem der Ansprüche 1 bis 3,
**dadurch gekennzeichnet,**
**dass** das Gehäuse (08) und die Bildschirmeinheit (05) witterungsbeständig ausgebildet sind und die Fuge zwischen dem Gehäuse (08) und der Bildschirmeinheit (05) entlang des Ausschnitts (07) wasserfest abgedichtet ist.

5. Ladestation nach einem der Ansprüche 1 bis 4,
**dadurch gekennzeichnet,**
**dass** im Gehäuse (08) eine Ventilationseinrichtung vorgesehen ist, mit der Luft in das Gehäuse (08) eingefördert und/oder aus dem Gehäuse (08) ausgefördert werden kann.

6. Ladestation nach einem der Ansprüche 1 bis 5,
**dadurch gekennzeichnet,**
**dass** im Gehäuse (08) ein Temperierungsgerät (17) zur Kühlung und/oder Beheizung der Ladestation (01) angeordnet ist, mit dem die Temperatur im Gehäuse verändert, insbesondere auf einen Sollwert gesteuert oder geregelt, werden kann.

7. Ladestation nach einem der Ansprüche 1 bis 6,
**dadurch gekennzeichnet,**
**dass** an die Bildschirmeinheit (05) Lautsprecher (11) angeschlossen sind, über die akustische Ansagen ausgegeben werden können.

8. Ladestation nach einem der Ansprüche 1 bis 7,
**dadurch gekennzeichnet,**
**dass** auf der Außenseite der Anzeigefläche (06) ein Schutzglas (18) zum Schutz der Anzeigefläche (06) vor mechanischen Beschädigungen angeordnet ist.

9. Ladestation nach einem der Ansprüche 1 bis 8,
**dadurch gekennzeichnet,**
**dass** die Außenseite des Schutzglases (18) oder der Anzeigefläche (06) eine Filterschicht zur Filterung von Infrarotlicht und/oder Ultraviolettstrahlung aufweist.

10. Ladestation nach einem der Ansprüche 1 bis 9,
**dadurch gekennzeichnet,**
**dass** die Außenseite des Schutzglases (18) oder der Anzeigefläche (06) eine Entspiegelungsschicht zur Reduktion von Reflektionen aufweist.

11. Ladestation nach einem der Ansprüche 1 bis 10,
**dadurch gekennzeichnet,**
**dass** die Ladestation (01) eine Benutzerschnittstelle (10) aufweist, an der der Benutzer sich anmelden und personenbezogene Identifikationsdaten an die Ladestation übertragen kann.

12. Ladestation nach einem der Ansprüche 1 bis 11,
**dadurch gekennzeichnet,**
**dass** die Benutzerschnittstelle (10) eine drahtlose Datenübertragung ermöglicht, insbesondere, dass die Benutzerschnittstelle eine Datenübertragung gemäß dem NFC-Protokollstandard erlaubt.

13. Ladestation nach Anspruch 12,
**dadurch gekennzeichnet,**
**dass** die Ladestation (01) einen Internetverbindung (09) aufweist, über die Daten, insbesondere benutzspezifische Werbeinhalte, aus dem Internet heruntergeladen und an der Anzeigefläche (06) der Bildschirmeinheit (05) angezeigt werden können.

14. Ladestation nach einem der Ansprüche 1 bis 13,
**dadurch gekennzeichnet,**
**dass** die Ladestation (01) zumindest eine Beleuchtungseinrichtung (12) zur Beleuchtung des Gehäuses (08) aufweist.

15. Ladestation nach Anspruch 14,
**dadurch gekennzeichnet,**
**dass** die Beleuchtungseinrichtung (12) in Abhängigkeit vom Ladeprozess ansteuerbar ist.
